# EUROPÄISCHE PATENTSCHRIFT

(11) **EP 0 490 062 B1**
(45) Veröffentlichungstag und Bekanntmachung des Hinweises auf die Patenterteilung: **14.07.1999**
(21) Anmeldenummer: 91117795.4
(22) Anmeldetag: 18.10.1991
(51) Int. Cl.: C21C 7/072, C04B 38/06, B22D 1/00

(54) **Verfahren zur Herstellung eines Gasspülsteins und Gasspülstein**
Process of manufacturing a gas purging brick and gas purging brick
Procédé de production d'une brique pour lavage au gaz, et brique pour lavage au gaz

(30) Priorität: 08.12.1990 DE 4039232
(43) Veröffentlichungstag der Anmeldung: 17.06.1992
(73) Patentinhaber: DIDIER-WERKE AG, 65189 Wiesbaden (DE)
(72) Erfinder: Rothfuss, Hans, W-6204 Taunusstein 1 (DE); Metzger, Herbert, W-4100 Duisburg 46 (DE); Winkelmann, Manfred, W-4150 Krefeld 11 (DE); Kopia, Jochen, W-5413 Bendorf (DE)
(74) Vertreter: Keil, Rainer A., Dipl.-Phys. Dr.

(56) Entgegenhaltungen:
- EP-A- 0 304 551
- EP-A- 0 325 709
- DE-A- 3 246 937
- DE-C- 3 907 500
- FR-A- 1 271 201
- FR-A- 2 238 683
- CHEMICAL ABSTRACTS, vol. 93, no. 8, August 1980, Columbus, Ohio, US; abstract no. 78168A, T.OCHIAI ET AL., NIPPON STEEL CORP.: 'Development and application of special refractories for gas injection' Seite 397 ; Taikabutsu 1980, 267, 179-87

## Beschreibung

Die Erfindung betrifft ein Verfahren zur Herstellung eines Gasspülsteins, wobei in die Feuerfestmasse des Gasspülsteins ein Netz eingebettet wird, das zur Bildung von Gaskanälen anschließend durch Ausbrennen oder Ausschmelzen beseitigt wird. Außerdem betrifft die Erfindung einen solchen Gasspülstein.

In der DE 32 46 937 A1 und in der DE 35 03 221 C2 sind derartige Gasspülsteine beschrieben. Die Spülwirkung ist durch die Stege des einen vorgesehenen Netzes beschränkt. Werden zur Erhöhung der Gasdurchlässigkeit die Querschnitte der Stege bzw. der Gaskanäle vergrößert, dann werden die in die Schmelze eintretenden Gasblasen groß, was einem sanften Spülen entgegenwirkt. Außerdem erleichtert ein großer Querschnitt das Eindringen von Schmelze in die Gaskanäle, was unerwünscht ist.

In der DE-PS 38 02 657 ist ein Gasspülstein beschrieben, in dem sich ein gasdurchlässiger Abstandsraum erstreckt, welcher in Verschleißrichtung unterschiedliche geometrische Form aufweist. Je nach dem Verschleißzustand werden an der Oberfläche des Gasspülsteins dabei unterschiedliche geometrische Muster sichtbar.

Aufgabe der Erfindung ist es, ein Verfahren der eingangs genannten Art vorzuschlagen, mit sich ein Gasspülstein mit verbesserter Spülwirkung herstellen läßt. Weiterhin ist es Aufgabe der Erfindung, einen Gasspülstein mit verbesserter Spülwirkung vorzuschlagen.

Erfindungsgemäß ist obige Aufgabe bei einem Verfahren der eingangs genannten Art dadurch gelöst, daß mehrere Netze aneinander anliegend in die Feuerfestmasse eingebettet werden.

Dieses Verfahren ist ebenso einfach durchzuführen, wie das bekannte Verfahren. Es brauchen lediglich anstelle eines Netzes mehrere solcher Netze in die Feuerfestmasse eingesetzt werden, die dann zur Bildung von Gaskanälen gemeinsam ausgebrannt oder ausgeschmolzen werden. Die Gasdurchlässigkeit des Gasspülsteins ist aber erheblich verbessert, da einerseits durch die Gaskanäle eine große Gasmenge durchführbar ist und diese andererseits auf sehr viele im Querschnitt kleine Kanäle verteilt ist. Das unterstützt ein sanftes Spülen. Außerdem neigt die Schmelze weniger dazu, in die - im Querschnitt kleinen - Gaskanäle einzutreten. Darüberhinaus ist eine feinfühlige Durchflußmengenregelung möglich.

Dadurch, daß die Netze aneinanderliegend in die Feuerfestmasse eingebettet werden, ergeben sich beim Ausbrennen oder Ausschmelzen der Netze offene Verbindungen zwischen den Gaskanälen benachbarter Netze. Dies kann die Gleichmäßigkeit der Gasausströmung verbessern, weil dann etwaige Unterbrechungen von Gaskanälen vom Gas umgehbar sind.

Ein erfindungsgemäßer Gasspülstein zeichnet sich dadurch aus, daß die vernetzten Gaskanäle in mehreren Lagen verlaufen.

Weitere vorteilhafte Ausgestaltungen der Erfindung ergeben sich aus den Unteransprüchen und der folgenden Beschreibung eines Ausführungsbeispiels. In der Zeichnung zeigen:
- Figur 1: eine Ansicht mehrerer aufeinanderliegender Netze,
- Figur 2: einen Längsschnitt eines Gasspülsteins,
- Figur 3: einen Schnitt längs der Linie III-III in Figur 2, dieser gegenüber verkleinert und
- Figur 4: einen Schnitt längs der Linie IV-IV in Figur 2, dieser gegenüber verkleinert.

Zur Herstellung des Gasspülsteins 1 wird zunächst dessen Außenteil 2 aus Feuerfestmasse gegossen. Anschließend werden in dieses mehrere aneinanderliegende, schlauchförmige Netze 3 eingesetzt. Beispielsweise werden vier Netze verwendet. Die Netze 3 sind beispielsweise Kunststoffnetze. Die vier Netze 3 haben etwa gleiche Fadendicke bzw. Stegdicke. Diese liegt bei 0,3 mm. Sie kann jedoch auch kleiner sein und bei 0,15 mm liegen.

Die Netze 3 erstrecken sich von der Gaseintrittsseite 4 des Gasspülsteins 1 bis zu dessen Gasaustrittsseite 5.

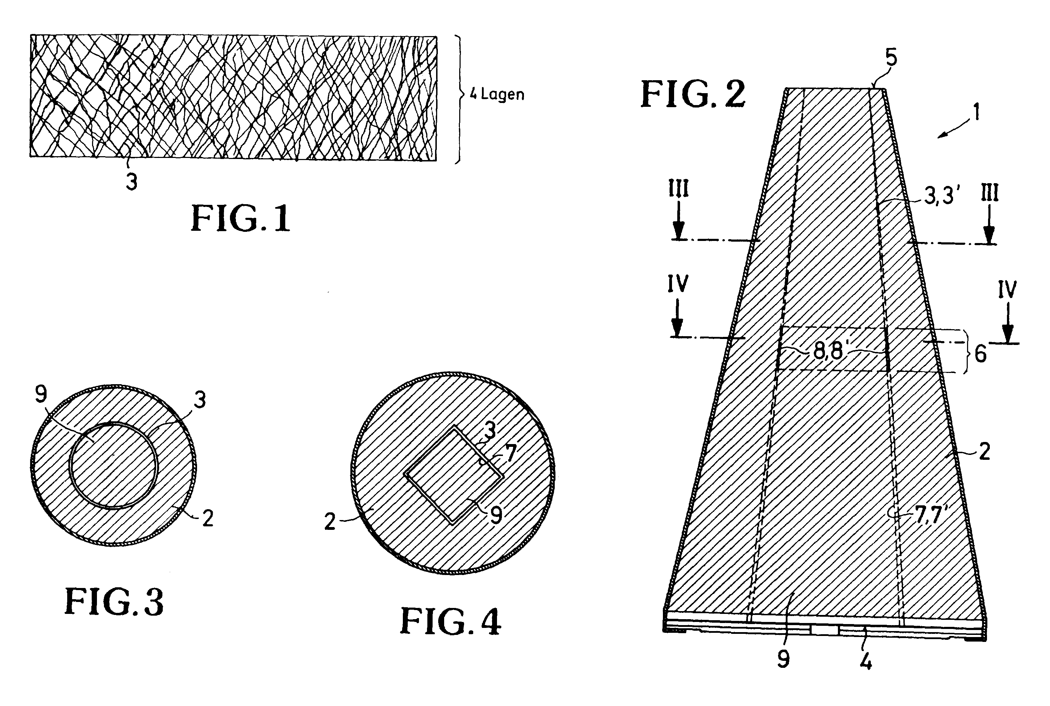

Von der Gaseintrittsseite 4 bis zu einer etwa in halber Höhe des Gasspülsteins 1 vorgesehenen Verschleißerkennungszone 6 sind die Netze im Querschnitt (vgl. Figur 4) quadratisch angeordnet. Zwischen der Verschleißerkennungszone 6 und der Gasaustrittsseite 5 verlaufen die Netze 3 im Querschnitt kreisförmig (vgl. Figur 3).

Ein weiteres Netz 7 ist in die Netze 3 eingesetzt. Es erstreckt sich von der Gaseintrittsseite 4 bis in die Verschleißerkennungszone 6. Dort ist es mittels eines umlaufenden Bandes 8 mit den Netzen 3 verbunden. Das Netz 7 ist ebenso wie die Netze 3 aus Kunststoff, wobei seine Fadendicke bzw. Stegdicke jedoch größer ist als die der Netze 3 und beispielsweise 0,5 mm beträgt.

Nach dem Einbringen der Netze 3, 7 wird das Innenteil 9 des Gasspülsteins 1 aus Feuerfestmasse gegossen. Nach dem Aushärten des Gasspülsteins 1 werden die Netze 3, 7 und das Band 8 ausgebrannt oder ausgeschmolzen, so daß die Netze 3 im Gasspülstein 1 in mehreren Lagen vernetzte Gaskanäle 3' bilden und anstelle des weiteren Netzes 7 Gaskanäle 7' und anstelle des Bandes 8 ein im Querschnitt (vgl. Figur 4) quadratischer Ringkanal 8' entsteht.

Im Ringkanal 8' münden die Gaskanäle 7' in die Gaskanäle 3'. Die Gaskanäle 3' der benachbarten Lagen sind zueinander an Stellen offen, an denen sich die Netze 3 vor dem Ausschmelzen berührten. Bei dieser Anordnung ist es alternativ möglich, die Netze 3 und dementsprechend die Gaskanäle 3' nur zwischen dem Ringkanal 8' und der Gasaustrittsseite 5 vorzusehen. Umgekehrt ist es nicht notwendig, das weitere Netz 7 bzw. die Gaskanäle 7' vorzusehen. Diese dienen der zusätzlichen Verbesserung der unten beschrieben Verschleißerkennung.

Im Spülbetrieb tritt das Spülgas durch die zahlreichen, feinen Gaskanäle 3' in die Schmelze. Die Summe der Querschnitte der Gaskanäle 3' erlaubt eine hohe Durchflußmenge. Eine leichte, feinfühlige Durchflußmengenregelung durch [nderung des Gasdrucks ist möglich, da nicht schon kleine Druckänderungen zu großen Durchflußmengenänderungen führen, sondern bei größeren Druckänderungen kleinere Durchflußmengenänderungen entstehen.

Der noch weitgehend unverschlissene Gasspülstein 1 läßt ein kreisförmiges Spülbild erkennen, wie dies in Figur 3 gezeigt ist. Bei bis in die Verschleißerkennungszone 6 fortgeschrittenem Verschleiß des Gasspülsteins 1 ergibt sich ein quadratisches Spülbild, wie dies in Figur 4 gezeigt ist. Die weiteren Gaskanäle 7' verringern dabei die Reibungsverluste des Spülgases und verstärken die Kühlung, so daß das Spülbild nach Figur 4 besonders deutlich hervortritt.

## Patentansprüche

1. Verfahren zur Herstellung eines Gasspülsteins,
wobei in die Feuerfestmasse des Gasspülsteins ein Netz eingebettet wird, das zur Bildung von Gaskanälen anschließend durch Ausbrennen oder Ausschmelzen beseitigt wird,
dadurch gekennzeichnet,
daß mehrere solcher Netze aneinander anliegend in die Feuerfestmasse eingebettet werden.

2. Verfahren nach Anspruch 1,
dadurch gekennzeichnet, daß die Netze so eingebettet werden, daß sie sich von der Gaseintrittsseite des Gasspülsteins bis zu dessen Gasaustrittsseite erstrecken.

3. Verfahren nach Anspruch 1 oder 2,
dadurch gekennzeichnet,
daß die Netze etwa gleiche Stegdicke, beispielsweise 0,15 mm bis 0,3 mm aufweisen.

4. Verfahren nach einem der vorhergehenden Ansprüche,
dadurch gekennzeichnet,
daß ein weiteres Netz eingebettet wird, das sich von der Gaseintrittsseite nur über einen Teil der Höhe des Gasspülsteins erstreckt.

5. Verfahren nach Anspruch 4,
dadurch gekennzeichnet,
daß das weitere Netz eine größere Stegdicke aufweist als die anderen Netze.

6. Verfahren nach Anspruch 4 oder 5,
dadurch gekennzeichnet,
daß das weitere Netz im Gasspülstein mittels eines Bandes mit den anderen Netzen verbunden wird.

7. Verfahren nach Anspruch 5 oder 6,
dadurch gekennzeichnet,
daß die Netze sich nur von dem Ende des weiteren Netzes bis zur Gasaustrittsseite erstrecken.

8. Verfahren nach einem der vorhergehenden Ansprüche,
dadurch gekennzeichnet,
daß die Netze einerseits einer Verschleißerkennungszone in einem kreisförmigen Querschnitt und andererseits der Verschleißerkennungszone in einem eckigen Querschnitt in die Feuerfestmasse eingebettet werden.

9. Gasspülstein mit mehreren vernetzten Gaskanälen, hergestellt nach einem Verfahren der vorhergehenden Ansprüche 1 bis 8,
dadurch gekennzeichnet,
daß die vernetzten Gaskanäle (3') in mehreren Lagen verlaufen.

10. Gasspülstein nach Anspruch 9,
dadurch gekennzeichnet,
daß die Gaskanäle (3') benachbarter Lagen teilweise zueinander offen sind.

11. Gasspülstein nach einem der vorhergehenden Ansprüche,
dadurch gekennzeichnet,
daß weitere Gaskanäle (7') vorgesehen sind, die sich von der Gaseintrittsseite (4) bis in eine Verschleißerkennungszone (6) erstrecken.

12. Gasspülstein nach Anspruch 11,
dadurch gekennzeichnet,
daß die weiteren Gaskanäle (7') in der Verschleißerkennungszone (6) über einen Ringkanal (8') mit den Gaskanälen (3') in Verbindung stehen.

13. Gasspülstein nach einem der vorhergehenden Ansprüche,
dadurch gekennzeichnet, daß die vernetzten Gaskanäle (3', 7') von der Gaseintrittsseite (4) bis in die Verschleißerkennungszone (6) in einem eckigen Querschnitt und von der Verschleißerkennungszone (6) bis zur Gasaustrittsseite (5) in einem kreisförmigen Querschnitt liegen.

## Claims

1. Process for manufacturing a gas injection stone, wherein a net is embedded in the refractory mass of the gas injection stone which is subsequently removed for the formation of gas channels by burning or melting, characterized in that several of such nets are embedded in the refractory mass adjacent to each other.

2. Process according to claim 1, characterized in that the nets are embedded such that they extend from the gas inlet side of the gas injection stone to its gas outlet side.

3. Process according to claim 1 or 2, characterized in that the nets have approximately the same thread thickness of for example 0.15 to 0.3 mm.

4. Process according to one of the preceding claims, characterized in that an additional net is embedded extending from the gas inlet side only a portion of the height of the gas injection stone.

5. Process according to claim 4, characterized in that the additional net comprises a greater thread thickness than the other nets.

6. Process according to claim 4 or 5, characterized in that the additional net is connected to other nets in the gas injection stone by means of a strap.

7. Process according to claim 5 or 6, characterized in that the nets only extend from the end of the further net to the gas outlet side.

8. Process according to one of the preceding claims, characterized in that on the one hand the nets are embedded in the wear detection zone in a cirucular cross-section and on the other hand in the wear detection zone in a angular cross section in the refractory mass.

9. Gas injection plug comprising several interlinked gas channels, manufactured in accordance with a process of the preceding claims 1 to 8, characterized in that the interlinked gas channels (3') run in several layers.

10. Gas injection plug according to claim 9, characterized in that the gas channels (3') of adjacent layers are partly open towards each other.

11. Gas injection stone according to one of the preceding claims, characterized in that further gas channels (7') are provided extending from the gas inlet side (4) to an wear detection zone (6).

12. Gas injection stone according to claim 11, characterized in that the interlinked gas channels (7') in the wear detection zone (6) are connected to the gas channels (3') via a ring channel (8').

13. Gas injection plug according to one of the preceding claims, characterized in that the interlinked gas channels (3', 7') from the gas inlet side (4) to the wear detection zone (6) are located in rectangular cross-section and from the wear detection zone (6) to the gas outlet side (5) in circular cross-section.

## Revendications

1. Procédé de production d'une brique pour lavage au gaz, un treillis étant enrobé dans la masse réfractaire de la brique pour lavage au gaz, treillis qui est enlevé ensuite pour la formation de canaux de gaz par combustion ou fusion, **caractérisé en ce que** plusieurs treillis de ce type sont enrobés dans la masse réfractaire de manière adjacente les uns aux autres.

2. Procédé selon la revendication 1, **caractérisé en ce que** les treillis sont enrobés de telle sorte qu'ils s'étendent du côté de l'entrée de gaz de la brique pour lavage au gaz jusqu'au côté de la sortie de gaz de cette brique.

3. Procédé selon la revendication 1 ou 2, **caractérisé en ce que** les treillis présentent à peu prés la même épaisseur de nervure, par exemple de 0,15 mm à 0,3 mm.

4. Procédé selon l'une des revendications précédentes, **caractérisé en ce qu**'un treillis supplémentaire est enrobé qui s'étend du côté de l'entrée de gaz seulement sur une partie de la hauteur de la brique pour lavage au gaz.

5. Procédé selon la revendication 4, **caractérisé en ce que** le treillis supplémentaire présente une épaisseur de nervure supérieure à celle des autres treillis.

6. Procédé selon la revendication 4 ou 5, **caractérisé en ce que** le treillis supplémentaire dans la brique pour lavage au gaz est raccordé aux autres treillis au moyen d'une bande.

7. Procédé selon la revendication 5 ou 6, **caractérisé en ce que** les treillis s'étendent seulement de l'extrémité du treillis supplémentaire jusqu'au côté de la sortie de gaz.

8. Procédé selon l'une des revendications précédentes, **caractérisé en ce que** les treillis sont enrobés dans la masse réfractaire d'un côté d'une zone d'identification d'usure dans une section circulaire, et de l'autre côté de la zone d'identification d'usure dans une section angulaire.

9. Brique pour lavage au gaz avec plusieurs canaux de gaz réticulés, fabriquée selon un procédé des revendications précédentes 1 à 8, **caractérisée en ce que** les canaux de gaz (3') réticulés passent dans plusieurs couches.

10. Brique pour lavage au gaz selon la revendication 9, **caractérisée en ce que** les canaux de gaz (3') de couches adjacentes sont en partie ouverts les uns par rapport aux autres.

11. Brique pour lavage au gaz selon l'une des revendications précédentes, **caractérisée en ce que** d'autres canaux de gaz (7') sont prévus, qui s'étendent du côté de l'entrée de gaz (4) jusqu'à une zone d'identification d'usure (6).

12. Brique pour lavage au gaz selon la revendication 11, **caractérisée en ce que** les canaux de gaz (7') supplémentaires dans la zone d'identification d'usure (6) sont en liaison avec les canaux de gaz (3') par l'intermédiaire d'un canal circulaire (8').

13. Brique pour lavage au gaz selon l'une des revendications précédentes, **caractérisée en ce que** les canaux de gaz (3', 7') réticulés sont, du côté de l'entrée de gaz (4) jusque dans la zone d'identification d'usure (6), dans une section angulaire et, de la zone d'identification d'usure (6) au côté de la sortie de gaz (5), dans une section circulaire.
